# EUROPÄISCHE PATENTANMELDUNG

(11) **EP 0 869 350 A2**
(43) Veröffentlichungstag der Anmeldung: **07.10.1998**
(21) Anmeldenummer: 98890079.1
(22) Anmeldetag: 23.03.1998
(51) Int. Cl.: G01N 21/53

(54) **Vorrichtung zur Trübungsmessung**

(30) Priorität: 03.04.1997 AT 565/97
(71) Anmelder: AVL List GmbH, 8020 Graz (AT)
(72) Erfinder: Lackner, Gerald, Dipl.-Ing., 8010 Graz (AT); Ponticelli, Martin, Dipl.-Ing., 8010 Graz (AT)
(74) Vertreter: Pinter, Rudolf, Dipl.-Ing.

(57) **Zusammenfassung**

Eine Vorrichtung zur Trübungsmessung, insbesonders am Abgas von Dieselbrennkraftmaschinen, weist eine Beleuchtungsanordnung (11) und eine relativ zum Gasstrom gegenüberliegende Sensoranordnung auf, die mit einer Auswerteeinrichtung in Verbindung steht. Zur einfachen und schnellen Berücksichtigung von Schwankungen der Beleuchtungsintensität ist im Streulichtbereich (14) der Beleuchtungsanordnung (11, 17, 18) ein Kontrollsensor (19) angeordnet, der mit einer Korrektureinheit für das Meßsignal der Sensoranordnung in der Auswerteeinrichtung verbunden ist und dessen unabhängig vom Gasstrom ermitteltes Korrektursignal bei der Auswertung berücksichtigt wird.

## Beschreibung

Die Erfindung betrifft eine Vorrichtung zur Trübungsmessung an partikelbeladenen Gasströmen, insbesonders am Abgas von Dieselbrennkraftmaschinen, mit einer Beleuchtungsanordnung und einer relativ zum Gasstrom gegenüberliegenden Sensoranordnung, die mit einer Auswerteeinrichtung in Verbindung steht. Weiters betrifft die Erfindung auch ein Verfahren zu einer derartigen Trübungsmessung, wobei die im Durchlichtverfahren ermittelte Abschwächung der Intensität einer den Gasstrom durchsetzenden elektromagnetischen Strahlung als Maß für die Partikelkonzentration verwendet wird.

Derartige Vorrichtungen bzw. die damit durchgeführten Meßverfahren arbeiten prinzipiell nach dem Beer-Lambert'schen Gesetz, wonach durch die im Gas bzw. Abgas befindlichen Partikel eine Abschwächung eines Lichtstrahles hervorgerufen wird. Die Größenordnung der Abschwächung wird als Maß für die Partikelbelastung des Gases herangezogen. Im speziell angesprochenen Fall der Abgasmessung an Diesel-Brennkraftmaschinen wird das Abgas zumeist einfach durch den Staudruck der Brennkraftmaschine über eine im Auspuff befindliche Sonde mit anschließendem Sondenschlauch in eine Meßkammer geleitet, der auf einer Seite die Beleuchtungsanordnung und auf der anderen Seite die Sensoranordnung zugeordnet ist.

In der Beleuchtungsanordnung werden als Beleuchtungsquelle bei bekannten Vorrichtungen der eingangs genannten Art (siehe beispielsweise EP-0 533 651-B1 oder auch EP-0 586 363 A1) bei Verwendung von sichtbarem Licht vorzugsweise Halogenlampen mit Abstrahlung von inkohärentem Licht über einen breiten Teil des sichtbaren Spektralbereiches eingesetzt. Daneben sind aber auch andere Beleuchtungsquellen, insbesonders etwa Leuchtdioden mit Intensitätsmaxima im Bereich grünen Lichtes, in Verwendung.

Abgesehen von verschiedenen bekannten Kalibriermethoden (siehe beispielsweise die erwähnte EP-0 533 651 B1) zur Feststellung bzw. Berücksichtigung von Linearitätsabweichungen zwischen Meßsignal-Pegel und auftreffendem Lichtstrom sind bei den meisten Vorrichtungen bzw. Verfahren der genannten Art auch Vorkehrungen dahingehend getroffen, daß von der Beleuchtungsanordnung bzw. der eigentlichen Beleuchtungsquelle ausgehende Schwankungen der abgestrahlten Intensität - hauptsächlich verursacht durch Schwankungen der Betriebstemperatur, zu einem geringeren Ausmaß aber auch etwa durch Schwankungen der Stromversorgung, Verschmutzungen oder dergleichen - bei gleichbleibender Trübung des gemessenen Gasstromes keine Schwankungen des ermittelten Meßwertes bewirken können. Zu diesem Zweck wird getrachtet, die abgestrahlte Lichtintensität möglichst konstant zu halten, wozu etwa bei LED's als Beleuchtungsquelle die Beleuchtungsanordnung thermostatisiert werden kann. Andererseits ist in diesem Zusammenhang aber auch beispielsweise bekannt, die Beleuchtungsquelle bzw. die abgestrahlte Beleuchtungsintensität mittels eines Referenzempfängers, der vom zu messenden Gasstrom nicht beeinflußtes Licht mißt und mit einem Regelverstärker zusammenarbeitet, nachzuregeln. Beide bekannten Maßnahmen erfordern einen relativ großen zusätzlichen vorrichtungsmäßigen Aufwand, wobei als Nachteil noch die verlängerten Aufwärm- bzw. Einregelzeiten kommen, die insbesonders dynamische Messungen sehr behindern.

Aufgabe der vorliegenden Erfindung ist es, eine Vorrichtung bzw. ein Verfahren der eingangs genannten Art so zu verbessern, daß die erwähnten Nachteile der bekannten Anordnungen und Verfahren vermieden werden und daß insbesonders auf einfache und auch im dynamischen Meßbetrieb brauchbare Weise Schwankungen der von der Beleuchtungsquelle abgestrahlten Lichtintensität keinen nachteiligen Einfluß auf das Meßergebnis haben können.

Diese Aufgabe wird bei einer Vorrichtung der eingangs genannten Art gemäß der vorliegenden Erfindung dadurch gelöst, daß im Streulichtbereich der Beleuchtungsanordnung ein Kontrollsensor angeordnet und mit einer Korrektureinheit für das Meßsignal der Sensoranordnung in der Auswerteeinrichtung verbunden ist. Entsprechend wird beim erfindungsgemäßen Verfahren vorgesehen, daß zur Korrektur von Intensitätsschwankungen der eingestrahlten elektromagnetischen Strahlung deren Streustrahlung unabhängig vom Gasstrom ermittelt und bei der Auswertung der eigentlichen Durchlichtmessung berücksichtigt wird.

Unter Streulichtbereich bzw. Streustrahlung ist hier im wesentlichen jener Bereich bzw. jene Strahlung zu verstehen, welche(r) für die eigentliche Messung nicht genutzt wird, das heißt also den hinsichtlich seiner Trübung zu messenden partikelbeladenen Gasstrom nicht in Richtung zur Sensoranordnung durchsetzt. Dieser vom zu messenden Gasstrom unbeeinflußte Teil der von der Beleuchtungsanordnung abgegebenen Beleuchtungsintensität schwankt ebenso wie das für die Messung durch den Gasstrom geschickte und an der Sensoranordnung gemessene Nutzlicht, sodaß die am Kontrollsensor gemessene Kontrollintensität sehr leicht, einfach und schnell in der Auswerteeinrichtung zur Korrektur des Meßsignals verwendet werden kann. Es ist nur ein weiterer einfacher Sensor erforderlich, dessen entsprechend behandeltes Ausgangssignal direkt in die Auswertung des Meßsignals einbezogen werden kann, sodaß keine Verzögerungen durch eine Nachregelung, Heizung oder dergleichen auftreten können.

Der Kontrollsensor ist in bevorzugter Ausgestaltung der Erfindungbezogen auf die Beleuchtungsrichtung zur Sensoranordnung - neben bzw. hinter der Beleuchtungsanordnung angeordnet. An dieser Stelle ist bei derartigen Anordnungen stets Platz vorhanden und auch ausgeschlossen, daß durch die Anbringung des Kontrollsensors das Nutzlicht in irgendeiner Weise gestört würde.

Die Beleuchtungsanordnung und der Kontrollsensor können in weiterer Ausgestaltung der Erfindung auf einer gemeinsamen Schaltungsplatine angeordnet sein, wobei die Beleuchtungsanordnung relativ zur Schaltungsplatine höher als der Kontrollsensor angeordnet ist. Damit ergibt sich auf einfache Weise die beschriebene gegenseitige Relation dieser beiden Teile, ohne daß sonstige zusätzliche konstruktive Maßnahmen erforderlich wären.

Nach einer anderen Weiterbildung der Erfindung ist der Leuchtkopf der Beleuchtungsanordnung jeweils in eine Bohrung einer Trägerplatte eingesteckt, wobei der Kontrollsensor hinter dieser Bohrung im Streulichtbereich angeordnet ist. Damit wird das bei den gängigen Beleuchtungsquellen, wie etwa Halogenlampen oder LED's, stets vorhandene Rückstreulicht einfach ausgenutzt, ohne daß das eigentliche Nutzlicht, welches aus der Bohrung in Richtung gegenüber liegender Sensoranordnung strahlt, irgendwie beeinflußt werden müßte.

Nach einer weiteren, besonders bevorzugten Ausgestaltung der Erfindung ist vorgesehen, daß die Beleuchtungsanordnung mehrere separate Leuchtkörper aufweist, welche zur Linearitätsüberprüfung der Messung separat ansteuerbar sind. Auf diese Weise kann eine Linearitätsüberprüfung wie beispielsweise in der eingangs angesprochenen EP-0533 651-B1 beschrieben, auch im vorliegenden Zusammenhang eingesetzt werden, welche im wesentlichen darauf beruht, daß stufenweise Intensitätserhöhungen oder -absenkungen vorgenommen und das zugehörigen Weißsignal gemessen wird.

Die beschriebene Vorrichtung bzw. das damit durchführbare Verfahren nach der Erfindung ist in vorteilhafter Weise für in weiten Grenzen beliebige Beleuchtungsquellen bzw. Beleuchtungsanordnungen verwendbar, da ja auf dieser Seite nichts nachgeregelt oder beispielsweise durch Heizung beeinflußt zu werden braucht - wesentlich ist nur die Berücksichtigung des Kontrollsignals des Kontrollsensors bei der Auswertung des Meßsignals der eigentlichen Sensoranordnung.

Die Erfindung wird im folgenden noch anhand des in der Zeichnung schematisch dargestellten Ausführungsbeispiels näher erläutert.

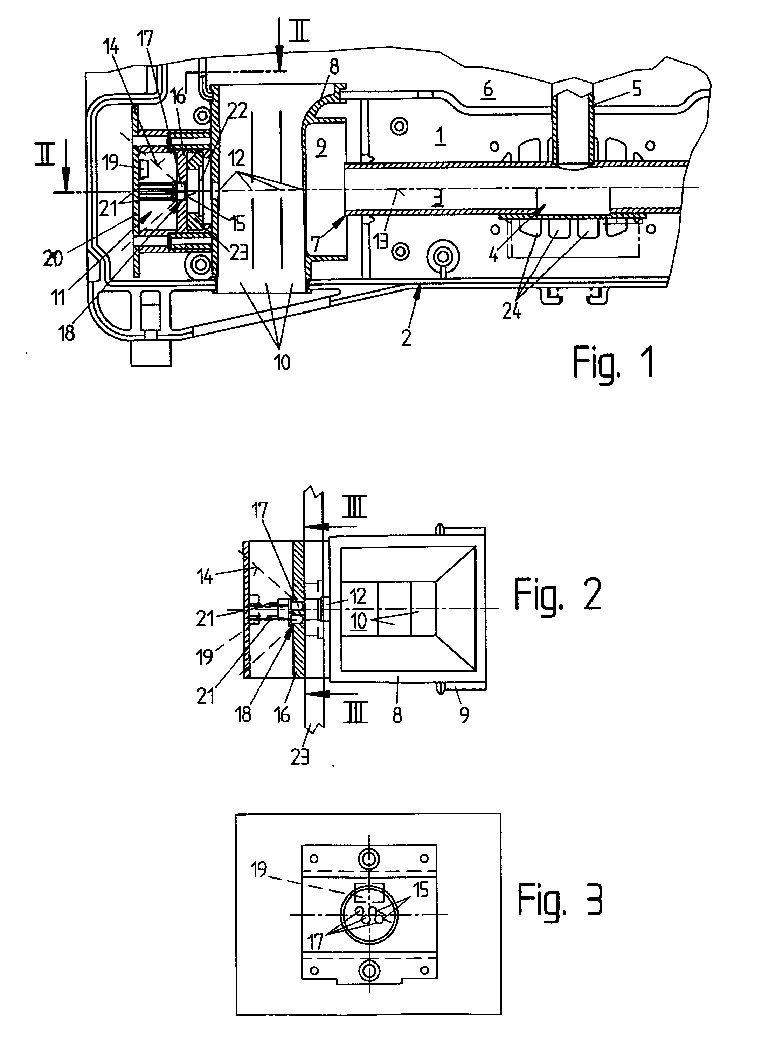

Fig. 1 zeigt dabei einen teilweise schematischen Längsschnitt durch eine Vorrichtung zur Trübungsmessung am Abgas von Dieselbrennkraftmaschinen, Fig. 2 zeigt einen teilweisen Schnitt entlang der Linie II-II in Fig. 1 und Fig. 3 zeigt eine teilweise Ansicht entlang des Pfeiles III in Fig. 2.

Die in Fig. 1 dargestellte Vorrichtung weist im unteren Bereich 1 eines Gehäuses 2 (beispielsweise als Kunststoff-Spritzgußteil ausgeführt) eine rohrförmige Meßkammer 3 auf, in deren Mittenbereich 4 von in der Darstellung oben her eine Zuführleitung 5 mündet. Diese Zuführleitung 5 steht auf hier nicht mehr dargestellte Weise mit einem im oberen Bereich 6 des Innenraumes des Gehäuses 2 angeordneten Umschaltventil in Verbindung, welches entweder zu analysierendes Abgas oder Kalibrierluft über die Zuführleitung 5 in die Meßkammer 3 leitet. Am dargestellten linken offenen Ende 7 der Meßkammer 3 ist ein Einbauteil 8 im Gehäuse 2 angeordnet, welcher einerseits einen das offene Ende 7 übergreifenden topfförmigen Prallbereich 9 trägt und andererseits Strömungskanäle 10 für aus dem oberen Bereich 6 des Gehäuses 1 durchströmende Spülluft, welche an der unteren Seite ins Freie austritt, bildet. Das aus dem seitlichen offenen Ende 7 der Meßkammer 3 ausströmende Abgas bzw. die Kalibrierluft im Kalibrierbetrieb wird-im topfförmigen Prallbereich 9 im wesentlichen um 180° umgelenkt und gelangt über Gehäuseöffnungen 24 ins Freie.

An der dem Prallbereich 9 abgewandten Seite des Einbauteils 8 ist eine Beleuchtungsanordnung 11 angeordnet, welche über Öffnungen 12 des Einbauteils 8 elektromagnetische Strahlung, beispielsweise sichtbares Licht oder Infrarot, entlang der Achse 13 der Meßkammer 1 in diese einstrahlt.

Auf der hier nicht dargestellten rechten Seite des im wesentlichen symmetrisch ausgebildeten Gehäuses 2 ist hinter einem entsprechenden Einbauteil 8 (wiederum mit Prallbereich 9, Strömungskanälen 10 und Öffnungen 12) eine Sensoranordnung angeordnet, in der beispielsweise mittels eines Fotowiderstandes, einer Si-Photodiode, oder eines anderen geeigneten Empfängers die von der Beleuchtungsanordnung 11 ausgesandte Strahlung detektiert wird. Das Meßsignal wird dann einer Auswerteeinrichtung zugeführt, welche aus der Abschwächung der detektierten Strahlung verglichen mit dem Meßsignal bei etwa mit sauberer Umgebungsluft durchströmter Meßkammer 3 auf die Partikelbeladung eines zur Messung durch die Meßkammer geleiteten Abgases schließt.

Bei der Inbetriebnahme der Vorrichtung bzw. auch vor der Durchführung bestimmter Meßserien bzw. sogar vor der Durchführung einer einzelnen Messung wird die Meßkammer 3 vorerst auf beschriebene Weise, beispielsweise mit reiner Umgebungsluft oder einem Referenzmedium durchströmt. Die dabei an der der Beleuchtungsanordnung 11 bezüglich der Meßkammer 3 gegenüberliegenden Sensoranordnung über deren Meßsignal charakterisierte Beleuchtungsintensität wird als Basiswert für die nachfolgende Messung bzw. die nachfolgenden Messungen verwendet. Wenn dann beispielsweise durch die Meßkammer 3 geleitetes Abgas einer Dieselbrennkraftmaschine eine Verringerung des an der Sensoranordnung erhaltenen Meßsignals um 10 % bewirkt, so kann diese Abschwächung aufgrund bekannter bzw. vorher kalibrierter Zusammenhänge als Maß für die Partikelbeladung bzw. sonstige Verunreinigung des Abgases herangezogen werden.

Wenn nach Durchführung der beschriebenen anfänglichen Kalibrierung (Ermittlung des Heißsignals) während der Durchführung einer Messung bzw. vor der Durchführung weiterer Messungen die von der Beleuchtungsanordnung 11 abgegebene Beleuchtungsintensität beispielsweise temperaturabhängig schwankt, so würde bei unverändertem Vertrauen auf den ursprünglichen Kalibrierwert das an der Sensoranordnung (bei unveränderter Trübung des gemessenen Abgases) ebenfalls schwankende ermittelte Meßsignal ein falsches Meßergebnis bringen. Um derartige Fehler auf einfache Weise auszuschalten, ist im Streulichtbereich 14 (symbolisch angedeutet durch einen strichlierten Kegel), neben bzw. hinter den jeweils in eine Bohrung 15 einer Trägerplatte 16 eingesteckten Leuchtköpfen 17 von hier als LED's ausgebildeten separaten Leuchtkörpern 18 der Beleuchtungsanordnung 11, ein Kontrollsensor 19 angeordnet und auf hier nicht dargestellte Weise mit einer Korrektureinheit für das Meßsignal der Sensoranordnung in der Auswerteeinrichtung der Meßvorrichtung verbunden. Da die beschriebenen Schwankungen (beispielsweise temperaturabhängig) der von den Leuchtköpfen 17 der Leuchtkörper 18 in Richtung der Achse 13 der Meßkammer 3 abgegebenen Nutzstrahlung sich auch in Schwankungen der im Streulichtbereich 14 wirksamen Streustrahlung auswirken, kann mittels des Kontrollsignals des Kontrollsensors 19 auf sehr einfache Weise eine Berücksichtigung im letztendlich erhaltenen Meßergebnis vorgenommen werden. Das ermittelte Meßsignal der Sensoranordnung wird dabei laufend mit einem aktuellen Korrekturfaktor multipliziert, der sich als Quotient aus dem Kontrollsignal zu Beginn der Messung (bei der Kalibrierung) und dem aktuellen Kontrollsignal darstellt.

Der Kontrollsensor 19 und die hier von LED's gebildeten Leuchtkörper 18 der Beleuchtungsanordnung 11 sind auf einer gemeinsamen Schaltungsplatine 20 angeordnet, wobei die LED's bzw. Leuchtkörper 18 hier über länger belassene Anschlußdrähte 21 relativ zur Schaltungsplatine 20 höher als der Kontrollsensor 19 angeordnet sind. Abgesehen davon könnte die Anordnung des Kontrollsensors 19 natürlich an beliebig anderer geeigneter Stelle im Streulichtbereich der Beleuchtungsanordnung erfolgen, wobei dieser Bereich naturgemäß stark von der Art der verwendeten Leuchtkörper und auch deren Anbringung in der Beleuchtungsanordnung 11 abhängt. Wesentlich ist nur, daß das zum Kontrollsensor 19 gelangende, entgegen zum Nutzlicht hier als Streulicht bezeichnete, Licht von der für die Messung herangezogenen Abschwächung des Nutzlichtes durch das Abgas in der Meßkammer 3 frei ist, sodaß die beschriebenen Intensitätsschwankungen durch Beeinflussung der Umwandlung des an der gegenüberliegenden Sensoranordnung erhaltenen Meßsignals zum Meßergebnis berücksichtigt werden können.

Insbesonders aus Fig. 3 ist noch zu ersehen, daß hier vier separate Leuchtköpfe 17 von beispielsweise LED's möglichst nahe gruppiert im Bereich des Durchstoßpunktes der Achse 13 der Meßkammer 3 angeordnet sind. Es ist damit einerseits eine Erhöhung der verwertbaren Gesamtintensität und andererseits eine separate Ansteuerung einzelner oder mehrere Leuchtkörper etwa für Linearitätsüberprüfungen der eingangs beschriebenen Art möglich.

Nur der Vollständigkeit halber ist hier noch auf ein in der Beleuchtungsanordnung 11 austrittsseitig vor den Leuchtköpfen 17 von der Seite her ins Gehäuse einschiebbares Schutzfenster 22 zu verweisen, welches auf einem länglichen Träger 23 angeordnet ist und bedarfsweise nach dem Herausziehen aus dem Gehäuse 2 von eventuell trotz der über die Strömungskanäle 10 erfolgenden Spülung mit Spülluft durch die Öffnung 12 in der zugehörigen Wand des Einbauteils 8 eindringenden, angelagerten Partikeln gereinigt werden kann.

## Patentansprüche

1. Vorrichtung zur Trübungsmessung an partikelbeladenen Gasströmen, insbesonders am Abgas von Dieselbrennkraftmaschinen, mit einer Beleuchtungsanordnung (11, 17, 18) und einer relativ zum Gasstrom gegenüberliegenden Sensoranordnung, die mit einer Auswerteeinrichtung in Verbindung steht, **dadurch gekennzeichnet**, daß im Streulichtbereich (14) der Beleuchtungsanordnung (11, 17, 18) ein Kontrollsensor (19) angeordnet und mit einer Korrektureinheit für das Meßsignal der Sensoranordnung in der Auswerteeinrichtung verbunden ist.

2. Vorrichtung nach Anspruch 1, dadurch gekennzeichnet, daß der Kontrollsensor (19) - bezogen auf die Beleuchtungsrichtung zur Sensoranordnung - neben bzw. hinter der Beleuchtungsanordnung (11, 17, 18) angeordnet ist.

3. Vorrichtung nach Anspruch 2, dadurch gekennzeichnet, daß die Beleuchtungsanordnung (11, 17, 18) und der Kontrollsensor (19) auf einer gemeinsamen Schaltungsplatine (20) angeordnet sind, wobei die Beleuchtungsanordnung (11, 17, 18) relativ zur Schaltungsplatine (20) höher als der Kontrollsensor (19) angeordnet ist.

4. Vorrichtung nach einem der Ansprüche 2 oder 3, dadurch gekennzeichnet, daß der Leuchtkopf (17) der Beleuchtungsanordnung (11, 18) jeweils in eine Bohrung (15) einer Trägerplatte (16) eingesteckt ist, wobei der Kontrollsensor (19) hinter dieser Bohrung (16) im Streulichtbereich (14) angeordnet ist.

5. Vorrichtung nach einem oder mehreren der Ansprüche 2 bis 4, dadurch gekennzeichnet, daß die Beleuchtungsanordnung (11) mehrere separate Leuchtkörper (18) aufweist, welche zur Linearitätsüberprüfung der Messung separat ansteuerbar sind.

6. Verfahren zur Trübungsmessung an partikelbeladenen Gasströmen, insbesonders am Abgas von Dieselbrennkraftmaschinen, wobei die im Durchlichtverfahren ermittelte Abschwächung der Intensität einer den Gasstrom durchsetzenden elektromagnetischen Strahlung als Maß für die Partikelkonzentration verwendet wird, **dadurch gekennzeichnet**, daß zur Korrektur von Intensitätsschwankungen der eingestrahlten elektromagnetischen Strahlung deren Streustrahlung unabhängig vom Gasstrom ermittelt und bei der Auswertung der eigentlichen DurchlichtMessung berücksichtigt wird.
